# EUROPÄISCHE PATENTSCHRIFT

(11) **EP 3 772 604 B1**
(45) Veröffentlichungstag und Bekanntmachung des Hinweises auf die Patenterteilung: **27.04.2022**
(21) Anmeldenummer: 20000266.5
(22) Anmeldetag: 23.07.2020
(51) Int. Cl.: F16F 9/32

(54) **DIFFERENZIALZYLINDERKOLBENEINHEIT**
DIFFERENTIAL CYLINDER PISTON UNIT
UNITÉ DE PISTON DE VÉRIN DIFFÉRENTIEL

(30) Priorität: 05.08.2019 DE 202019003250 U
(43) Veröffentlichungstag der Anmeldung: 10.02.2021
(73) Patentinhaber: Bümach Engineering International B.V., 7826 TA Emmen (NL)
(72) Erfinder: Bueter, Josef, 49733 Haren/Altenberge (DE)
(74) Vertreter: Weihrauch, Frank

(56) Entgegenhaltungen:
- DE-U1-202012 008 999
- DE-U1-202012 009 001

## Beschreibung

Die Erfindung betrifft eine Kolbeneinheit eines Differenzialzylinders.

Aus dem Stand der Technik sind unterschiedliche Lösungen für eine Kopplung eines Kolbens mit einer Kolbenstange bekannt. Hierbei handelt es sich es sowohl um formschlüssige, kraftschlüssige als auch stoffschlüssige Kopplungen.

Soweit es sich um formschlüssige und kraftschlüssige Kopplungen handelt besteht das Problem, dass Maßnahmen gegen eine Lockerung der Kopplung von Kolben und Kolbenstange vorgesehen werden müssen.

Beispielsweise ist es aus dem Stand der Technik bekannt, den Kolben und die Kolbenstange miteinander zu verschrauben. Hierbei wird zur Sicherung dieser Verbindung beispielsweise Metallkleber verwandt. Nachteilig ist hierbei, dass dieser nach der Aushärtung durch eine zu geringe Elastizität bei der Belastung zwischen den Konturen des Gewindefreiraums ausbrechen kann. Eine andere Möglichkeit besteht darin, zusätzliche Verschraubungen vorzusehen, die entweder als Kontermuttern oder als Verspannungen mit einem gegenläufigen Gewinde vorliegen können.

Eine Lösung mit einer Kolbeneinheit mit einem zweigeteilten Kolben wird durch US 2016/0325778 A1 beschrieben. Hierbei werden zwei Kolbenteile gegeneinander verschraubt. Nachteilig ist an dieser Lösung, dass sich ohne Zusatzmaßnahmen die Verschraubung durch die Betriebsbelastung lockern oder lösen kann.

Die beschriebenen Lösungen stellen letztlich keine vollständig sichere Verbindung bereit, insbesondere wenn es auf eine exakte Positionierung bei einer Ausfahrt und Einfahrt der Kolbenstange ankommt oder wenn die Kolbeneinheit hohen dynamischen Belastungen ausgesetzt ist. Soweit Sicherungselemente eingesetzt werden, um eine Lockerung zu verhindern besteht die Gefahr, dass sich diese selbst lockern oder lösen können.

Aus dem Stand der Technik ist es auch bekannt, eine Kolbeneinheit mittels einer stoffschlüssigen Verbindung bereitzustellen. Eine Lockerung kann so verhindert werden, bedingt aber andere Nachteile. Insbesondere sind Schweißverbindungen bekannt, welche jedoch den Einsatz von speziell qualifiziertem Personal erfordern, aufwendig sind und den Nachteil einer thermischen Belastung der Kopplungspartner aufweisen. Zudem besteht der Nachteil, dass derartige stoffschlüssige Verbindungen praktisch nicht demontierbar sind.

Das Dokument DE 20 2012 008999 U1, welches als der nächstliegende Stand der Technik angesehen wird, offenbart die Merkmale des Oberbegriffs des Anspruchs 1.

Die Aufgabe der Erfindung ist es, eine Kolbeneinheit für einen Differenzialarbeitszylinder aufzuzeigen, welche eine besonders hohe Zuverlässigkeit hinsichtlich der Kopplung aufweist, Kostenersparnisse in der Herstellung bewirkt sowie eine einfache Montage und Demontage ermöglicht.

Die Aufgabe wird durch die im Schutzanspruch 1 aufgeführten Merkmale gelöst. Bevorzugte Weiterbildungen ergeben sich aus den Unteransprüchen.

Als Differenzialarbeitszylinder wird im Sinne der vorliegenden Erfindung ein doppelt wirkender hydraulischer Arbeitszylinder bezeichnet. Hierbei handelt es sich um einen hydraulischen Arbeitszylinder, der zwei entgegengesetzt wirkende Arbeitsräume aufweist, so dass bei einer Druckbeaufschlagung des ersten Arbeitsraums die Kolbeneinheit in eine erste Richtung, und bei einer Druckbeaufschlagung des zweiten Arbeitsraums die Kolbeneinheit in die entgegengesetzte Richtung bewegt wird. Die Kolbeneinheit des Differenzialarbeitszylinders wird nachfolgend als Differenzialzylinderkolbeneinheit bezeichnet.

Erfindungsgemäß weist die Differenzialzylinderkolbeneinheit eine Kolbenstange, einen Kolben sowie einen Kopplungsring und einen Fixierring auf.

Der Kopplungsring und der Fixierring werden nachfolgend zusammengefasst auch als die Kolbenringe bezeichnet.

Die Kolbenstange weist erfindungsgemäß eine Außenringnut auf.

Die Querschnittsform der Außenringnut korrespondiert mit der Querschnittsform des Kopplungsrings. Die Außenringnut ist so ausgebildet, dass sie den Kopplungsring teilweise aufnehmen kann. Die Querschnittsform des Kopplungsrings ist vorzugsweise kreisförmig und die Querschnittsform der Außenringnut vorzugsweise halbkreisförmig ausgebildet. Es sind aber auch andere Querschnittsformen, beispielsweise rechteckige Querschnitte möglich.

Der Kopplungsring ist erfindungsgemäß geteilt und hierbei vorzugsweise zweiteilig ausgebildet. Für eine einfache Montage ist der Kopplungsring vorzugsweise zweiteilig ausgebildet, wodurch er einfach und werkzeuglos in die Lastaußenringnut eingelegt werden kann. Bei einer zweiteiligen Ausbildung schließt jeder Kopplungsringabschnitt einen Winkel von etwa 180 Grad ein.

Erfindungsgemäß weist der Kolben eine axiale Bohrung auf, in der die Kolbenstange aufgenommen ist. An einem kolbenbodenseitigen Ende des Kolbens ist eine zu dem kolbenbodenseitigen Ende axial einseitig offene Innenringnut angeordnet. Der Innendurchmesser der axialen Bohrung ist größer als der Außendurchmesser der Kolbenstange. Somit ist die Kolbenstange in die axiale Bohrung einschiebbar. Das kolbenbodenseitige Ende des Kolbens, an welchem sich die axial einseitig offene Lastinnenringnut befindet, ist an der lastabgewandten Seite des Kolbens angeordnet.

Als kolbenbodenseitiges Ende des Kolbens wird die Seite des Kolbens verstanden, welche bei bestimmungsgemäßer Anordnung der Kolbeneinheit in einem Arbeitszylinder, der als Differenzialzylinder ausgebildet ist, in Richtung des Kolbenraums zeigt und bei einer Ausfahrt mit dem Arbeitsbetriebsdruck des Fluids beaufschlagt wird. Dem kolbenbodenseitigen Ende des Kolbens liegt axial das kolbenstangenseitige Ende gegenüber. Das kolbenstangenseitige Ende wird auch als führungsseitiges Ende bezeichnet. Als kolbenstangenseitiges Ende des Kolbens wird die Seite des Kolbens verstanden, welche bei bestimmungsgemäßer Anordnung der Kolbeneinheit in einem Differenzialzylinder in Richtung des Kolbenstangenraums zeigt und bei einer Einfahrt mit dem Arbeitsbetriebsdruck des Fluids beaufschlagt wird, um eine Kraft in Zugrichtung, nachfolgend auch als Zugkraft bezeichnet, zu erzeugen. Die Zugrichtung ist die Richtung, in die sich der Kolben bei einer Beaufschlagung des Kolbenringraums mit einem hydraulischen Druck bewegt. Die Zugrichtung wird nachfolgend auch als Einfahrtrichtung bezeichnet. Die der Einfahrtrichtung der Kolbeneinheit entgegengesetzte Richtung ist die Ausfahrtrichtung. Für eine Bewegung des Kolbens in Ausfahrtrichtung wird der Kolbenraum mit dem Arbeitsbetriebsdruck des Fluids beaufschlagt. Die Ausfahrtrichtung wird auch als Schubrichtung bezeichnet.

Die Innenringnut des Kolbens ist erfindungsgemäß dadurch gekennzeichnet, dass diese einen Kopplungsringabschnitt sowie einen Fixierringabschnitt aufweist. Der Kopplungsringabschnitt und der Fixierringabschnitt werden durch die Gestaltung der Kontur der Innenringnut ausgebildet.

Der Kopplungsringabschnitt ist ausgebildet, den mehrteiligen Kopplungsring radial zu umfassen. Vorzugsweise korrespondieren dabei die Kontur des Kopplungsringabschnitts und der der Innenringnut zugewandte Abschnitt der Außenkontur des Kopplungsrings. Vorzugsweise ist der Kopplungsring in seinem Querschnitt kreisförmig konvex und somit der Kopplungsringabschnitt teilkreisförmig, vorzugsweise viertelkreisförmig, konkav geformt. Die Kontur des Kopplungsringabschnitts ist dabei so geformt, dass diese einseitig offen ist und so der Kolben auf den eingelegten Kopplungsring axial aufgeschoben werden kann.

Der Fixierringabschnitt grenzt an den Kopplungsringabschnitt an. Auch in Bezug auf die Kontur des Fixierringabschnitts gilt, dass diese mit der Außenkontur des Fixierrings korrespondiert. Der Fixierringabschnitt weist ferner eine Hinterschneidungskontur auf. Als Hinterschneidungskontur im Sinne der vorliegenden Anmeldung wird eine Kontur verstanden, die einen Rücksprung aufweist, so dass eine Flanke ausgebildet wird, an der sich der eingelegte Fixierring in der Ausfahrtrichtung abstützt.

Die Außenringnut und der Kopplungsringabschnitt bilden erfindungsgemäß zusammen einen Kopplungsringnutenraum aus, in welchem erfindungsgemäß der Kopplungsring angeordnet ist.

Der Kopplungsring wird erfindungsgemäß durch den Kopplungsringabschnitt radial umschlossen. Als radial umschlossen ist zu verstehen, dass der Kopplungsring an seiner Außenseite zumindest insoweit überdeckt wird, dass er aus dem Kopplungsringnutenraum nicht herausfallen oder entnommen werden kann. Ist der Kopplungsring in die Außenringnut eingelegt, wird der Kolben mit der Innenringnut über den Kopplungsring geschoben, bis der Kopplungsring den Kopplungsringabschnitt erreicht hat. Damit wird der Kopplungsring in seiner Position formschlüssig festgelegt.

Der Kolben ist erfindungsgemäß durch den Kopplungsring auf der Kolbenstange in Zugrichtung einseitig axial formschlüssig festgelegt. Der Kopplungsring bewirkt, dass der Kolben in seiner axialen Verschiebbarkeit auf der Kolbenstange in Richtung des lastentragenden Kopplungsrings durch den Kopplungsring formschlüssig begrenzt wird. Bei einer Bewegung der Kolbeneinheit in Zugrichtung wird durch eine Beaufschlagung des Kolbenstangenraums mit einem unter Betriebsdruck stehenden Hydraulikfluid eine Druckkraft auf die Kopplungsringfläche bewirkt. Der Kolben überträgt über die Kontur der Innenringnut im Kopplungsringabschnitt die Kraft zunächst auf den Kopplungsring. Von dem Kopplungsring wird die Kraft über die Außenringnut auf die Kolbenstange übertragen.

Erfindungsgemäß ist der Fixierring in dem Fixierringabschnitt zwischen der Hinterschneidungskontur und dem Kopplungsring angeordnet. Der Fixierring ist einteilig ausgebildet.

Der Fixierring ist federnd ausgebildet und greift in einer Entspannungslage in den Zwischenraum zwischen der Hinterschneidungskontur und dem Kopplungsring in dem Bereich der Fixieraußenringnut ein. Nach der Montage des Kolbens bleibt die Innenringnut axial einseitig, nämlich kolbenbodenseitig, zugänglich. Von dort wird nach der Montage des Kolbens der federnde Fixierring in die Innenringnut in dem beschriebenen Bereich eingesetzt. Er dient der Festlegung der Kolbenposition auf der Kolbenstange und wird im Betrieb des Differenzialzylinders mit der vollen Betriebslast bei einer Betätigung in Ausfahrtrichtung belastet.

Der Fixierring legt den Kolben auf der Kolbenstange in einer Ausfahrtrichtung einseitig axial und formschlüssig fest. Die Ausfahrtrichtung ist die Richtung, in welche sich der Kolben entgegen der Zugrichtung bewegt, wobei die Kraft, die die Ausfahrtrichtung bewirkt, durch den Betriebsdruck des Fluids auf der Kolbenbodenseite aufgebracht wird. Dabei stützt sich zur formschlüssigen Festlegung der Fixierring auf der einen Seite gegen die Hinterschneidungskontur und auf der anderen Seite gegen den Kopplungsring ab. Die zwischen Kolbenstange und Kolben mittels des Fixierrings zu übertragende Kraft wirkt dabei auf die Hinterschneidungskontur des Fixierringabschnitts. Durch die erfindungsgemäß vorliegende besondere Ausbildung des Fixierrings wird vorteilhaft mittels der zweiten Ringfläche des Fixierrings, also der äußeren Ringfläche, zu der Hinterschneidungskontur ein flächiger Drucckontakt ausgebildet. Die Kräfte bei einer aktiv durch eine Druckbeaufschlagung des Kolbenraums bewirkten Bewegung der Kolbeneinheit in Ausfahrtrichtung werden also mittelbar zunächst von dem Kolben auf den Fixierring, dann von dem Fixierring auf den Kopplungsring und von dem Kopplungsring auf die Kolbenstange übertragen.

Bei eventuellen passiven Bewegungen, die durch Schublasten oder Zuglasten an der Kolbenstange bewirkt werden können, liegen die beschriebenen Kraftübertragungen in umgekehrter Weise vor.

Bei einer eventuellen passiven Einfahrt, die durch eine Schublast an der Kolbenstange bewirkt werden könnte, werden die Kräfte ebenfalls mittelbar in umgekehrter Folge, somit von der Kolbenstange mittelbar zunächst auf den Kopplungsring, dann von dem Kopplungsring auf den Fixierring und von dem Fixierring auf den Kolben übertragen.

Bei einer eventuellen passiven Ausfahrt, die durch eine Zuglast an der Kolbenstange bewirkt werden könnte, werden die Kräfte von der Kolbenstange mittels der Außenringnut auf den Kopplungsring und von diesem mittel des Kopplungsringabschnitts der Innenringnut des Kolbens auf den Kolben übertragen.

Im Zusammenwirken der Außenringnut, des Kopplungsrings und des Fixierrings sowie der Innenringnut mit deren besonderer Ausgestaltung ist der Kolben relativ zu der Kolbenstange axial in beiden Richtungen formschlüssig festgelegt.

Ferner weist der Fixierring einen abgeflachten radialen Querschnitt, nachfolgend teilweise auch als ovalisierter Querschnitt bezeichnet, auf. Bevorzugt ist der Fixierring als sogenannter BOA-Federring ausgebildet, wobei BOA für Bevel-Oval-Application steht. Dieser ovalisierte Querschnitt weist den Vorteil auf, dass zum ersten eine geringere axiale Erstreckung vorliegt als bei einem Rundring und somit ein geringerer Bauraum benötigt wird. Ferner kann sich der so geformte Fixierring mit einer ovalisierten flachen Flanke an der dann einfach formbaren Hinterschneidungskontur flächig abstützen und so hohe Flächenpressungswerte vermeiden.

Der ovalisierte Querschnitt des Fixierrings ist in dieser Weiterbildung bevorzugt als abgeflachter radialer Querschnitt ausgebildet. Der abgeflachte radiale Querschnitt weist dabei eine Querschnittslängsachse und eine Querschnittsquerachse auf.

Die Querschnittslängsachse und die Querschnittsquerachse stehen orthogonal zueinander. Die beiden Achsen können in den abgeflachten radialen Querschnitt einbeschrieben werden. Dabei erstreckt sich der Querschnitt entlang der Querschnittlängsachse länger als entlang der Querschnittsquerachse.

Der Querschnitt weist entlang der Querschnittslängsachse gegenüberliegende ebene Begrenzungen auf, welche eine erste und eine zweite Ringfläche ausbilden. Die Begrenzungen des Querschnitts sind im Wesentlichen parallel ausgebildet und gegenüber einer Hauptlängsachse geneigt. Dabei sind die Ringflächen jeweils auf einer Innenseite und auf einer Außenseite des Fixierrings angeordnet. Die erste Ringfläche ist an der Innenseite und die zweite Ringfläche an der Außenseite angeordnet. Die Ringflächen entsprechen im geometrischen Sinne vorzugsweise im Wesentlichen einer Kegelstumpfmantelfläche.

Der Fixierring ist auch in dieser Weiterbildung elastisch federnd ausgebildet. Hierzu ist der Fixierring aus einem flexiblen und belastbaren Material, vorzugsweise aus Federstahl, gefertigt. Der Fixierring ist somit in der Lage, auf eine belastende Kraft durch eine elastische Verformung zu reagieren.

Der Fixierring ist erfindungsgemäß ausgebildet, unter Einwirkung einer Kraft eine Spannungslage und ohne Einwirkung einer Kraft eine Entspannungslage einzunehmen.

In der Spannungslage wird der Fixierring durch die einwirkende Kraft elastisch verformt und wird somit gespannt. Wirkt die Kraft nicht mehr, kehrt der Fixierring in seine Entspannungslage zurück.

Dabei ist in einer Entspannungslage die Querschnittslängsachse gegenüber einer Ringebene um einen Winkel alpha geneigt.

Als Ringebene wird die Planebene verstanden, welche orthogonal zu der Hauptlängsachse des Fixierrings angeordnet ist. Ferner wird als umlaufende Ringachse die kreisförmige Gesamtheit der Schnittpunkte der jeweiligen Querschnittsquerachse mit der Querschnittslängsachse in allen Querschnitten verstanden. Ringebene und umlaufende Ringachse sind zueinander parallel.

Der Winkel alpha liegt dabei vorzugsweise zwischen 20 und 70 Grad, besonders bevorzugt zwischen 45 und 60 Grad. Somit ergibt sich für den Fixierring eine konische Form.

Der Fixierring ist durch eine Verformung mit Veränderung der Querschnittslängsachse um die umlaufende Ringachse zu einer Spannungslage spannbar, wobei in der Spannungslage die Querschnittslängsachse um einen Winkel beta geneigt ist und der Winkel beta größer als der Winkel alpha ist.

Bei der Spannung des Fixierringes mittels einer einwirkenden Kraft verformt sich der Fixierring so, dass sich die Querschnittslängsachse zur Ringebene hin aufrichtet. Somit wird der Winkel zwischen Querschnittslängsache und Ringebene größer als in der Entspannungslage. Vorzugsweise beträgt die Differenz zwischen dem Winkel alpha und dem Winkel beta mehr als 20 Grad.

Die Verformung durch Verdrehung um die umlaufende Ringachse überlagert sich mit einer radialen Aufweitung bei einem Eintritt in den Fixierringabschnitt der Innenringnut. Wenn der Fixierring in den Fixierringabschnitt der Innenringnut eingebracht ist und hierbei in seine Entspannungslage gebracht wird, vergrößern sich sowohl der Innendurchmesser als auch der Außendurchmesser. Insbesondere vergrößert sich aber auch die Differenz zwischen dem Innendurchmesser und dem Außendurchmesser. Werden Innen- und Außendurchmesser auf die Ringebene oder auf eine Ebene parallel zur Ringebene projiziert, entsteht eine Projektionsfläche des Fixierrings. Die Projektionsfläche kann auch als axiale Überdeckungsfläche bezeichnet werden.

Die axiale Überdeckungsfläche verringert sich in der Spannungslage und vergrößert sich in der Entspannungslage.

Die Differenzialkolbeneinheit weist insbesondere die nachfolgend beschriebenen Vorteile auf.

Ein erster Vorteil besteht darin, dass der Kolben auf der Kolbenstange vollständig formschlüssig festgelegt ist. Damit ist vorteilhaft eine Lockerung oder ein Lösen des Kolbens während des Betriebs zuverlässig ausgeschlossen.

Überdies sind keine Vorspannkräfte vorhanden, die eine Reduktion der Betriebsbelastbarkeit bewirken würden.

In besonderer Weise ist es vorteilhaft, dass die Kolbenstange bei der Herstellung lediglich in sehr geringem Maße einer spanenden Bearbeitung unterzogen werden muss. Es ist lediglich erforderlich, eine Außenringnut einzubringen. Dadurch werden Beschädigungen der Kolbenstange während der Bearbeitung vermieden und es wird eine hohe Rundlaufgenauigkeit ermöglicht. Dieser Vorteil ist vorliegend besonders dadurch wirksam, weil eine Kolbenstange eines Differenzialzylinders eine hohe Knickstabilität aufweisen muss.

Es ist daher besonders vorteilhaft, dass lediglich eine einzige Außenringnut in die Kolbenstange eingebracht werden muss. Zudem liegt die Außenringnut in der Nähe des kolbenbodenseitigen Endes der Kolbenstange und damit außerhalb der für Knickbelastungen kritischen Zone der Kolbenstange. Insbesondere können Nuten oder Querschnittsänderungen der Kolbenstange im Bereich des führungsseitigen Endes des Kolbens und somit Kerbwirkungen in diesem kritischen Bereich vermieden werden.

Da lediglich eine einzige Außenringnut in die Kolbenstange eingebracht werden muss, vermindert dies die notwendigen Bearbeitungszeiten.

Ein weiterer Vorteil liegt darin, dass der Fixierring gegenüber der elastischen Verformung durch Verdrehung um die umlaufende Ringachse bei gleicher Dimensionierung höhere Kräfte entgegensetzen kann, als beispielsweise bei einer bloßen radialen Aufweitung oder radialen Stauchung.

Da in der Spannungslage die axiale Überdeckungsfläche des Fixierrings geringer ist als in der Entspannungslage besteht als weiterer Vorteil die Möglichkeit, den Ringspalt zwischen dem Kolben und der Kolbenstange zur Einführung des Fixierrings besonders schmal und somit die Hinterschneidungskontur vergleichsweise breit und somit mit einer vergleichsweise großen Fläche auszubilden. Durch die vergleichsweise größere Fläche der Hinterschneidungskontur werden hohe Flächenpressungswerte an dem Kolben vermieden. Somit kann für den Kolben ein Material gewählt werden, das kostengünstig ist und eine werkzeugschonende und rationelle spanende Bearbeitung zulässt.

Diese vorteilhaften Merkmale ermöglichen es, die erfindungsgemäße Differenzialzylinderkolbeneinheit in beiden Richtungen, also sowohl in der Einfahrtrichtung als auch in der Ausfahrtrichtung mit den typischen hohen Kräften eines Differenzialarbeitszylinders zu belasten und hierbei trotzdem an lediglich einer axialen Position Ringnuten in der Kolbenstange und in dem Kolben vorzusehen. Vorteilhaft erfolgt sowohl durch den Kopplungsring gegenüber der Kolbenstange als auch durch den Fixierring gegenüber dem Kolben eine flächige Kraftübertragung. Soweit je nach konkreter Ausbildung der Konturen zwischen dem Kopplungsring und dem Fixierring eine linienförmige Kraftübertragung vorliegt ist dies unproblematisch, da hier ohne erhebliche Kosten für hohe Flächenpressungswerte geeignetes Material für den Kopplungsring und den Fixierring verwandt werden kann.

Ferner besteht ein besonderer Vorteil in der einfachen Montage. Die Montage ist in der Regel werkzeuglos ausführbar. Ferner ist die erfindungsgemäße Kolbeneinheit unanfällig gegen Montagefehler, da sich die Bauteile durch ihre Geometrie praktisch nicht fehlerhaft montieren lassen. Vorteilhaft ist zudem, dass bei der Montage weder ein Spananfall noch eine sonstige Verschmutzung auftritt. Zudem ist die Kolbeneinheit sofort einsetzbar, da keine Aushärtezeiten - wie sie insbesondere bei Metallklebern vorliegen - zu beachten sind. Zudem besteht der Vorteil einer einfachen Demontage, so dass auch Reparaturen problemlos und zeitsparend und gegebenenfalls auch durch angelernte Fachkräfte ausgeführt werden können.

Besonders bevorzugt weist der Fixierring eine keilförmige beidseitige Abflachung auf, wobei die Keilform in Entspannungsrichtung wirkt. Soweit sich durch einen Wechsel von Bewegungen in der Zugrichtung und der Ausfahrtrichtung ein beginnendes Bewegungsspiel zwischen Kolbenstange, den Kolbenringen und der Kolbenstange ausbildet, würde sich der Fixierring weiter entspannen können und in seiner Keilform tiefer in den Raum zwischen Kopplungsring und Hinterschneidung eindringen und ein Bewegungsspiel wieder aufheben.

Gemäß einer vorteilhaften Weiterbildung ist der Querschnitt des Fixierrings rechteckig ausgebildet.

Durch einen rechteckigen Querschnitt ist die Verkleinerung der axialen Überdeckungsfläche bei einem Wechsel in die Spannungslage sehr wirksam umsetzbar. Durch eine Variation der Größe der Ringflächen sowie der Federkonstante ist die Sperrwirkung in der Ringnut nach dem Entspannen des Fixierringes einstellbar.

Der Querschnitt ist gemäß einer weiteren vorteilhaften Weiterbildung zumindest an einer ersten Übergangskontur, welche einen Innendurchmesser ausbildet, und an einer zweiten Übergangskontur, welche den Außendurchmesser ausbildet, abgerundet.

Eine Abrundung der wesentlichen Konturen vereinfacht das Einsetzen des Kolbensicherungsringes weiter, da der Ring ohne Verkantung in die Ringnut gleiten kann und Beschädigungen vermieden werden können.

Die beiden Übergangskonturen dienen hierbei auch zur Festlegung der Innen- und Außendurchmesser.

Die Erfindung wird als Ausführungsbeispiel anhand von
- Fig. 1: teilgeschnittene Ansicht der Kolbeneinheit
- Fig. 2: geschnittene Detailansicht des Kolbens mit Innenringnut
- Fig.3: axiale Ansicht der Kolbenstange mit Kopplungsring
- Fig. 4: Fixierring (Draufsicht und axialer Schnitt in schematischer Darstellung)
- Fig. 5: Fixierring (Funktionsschema) näher erläutert.

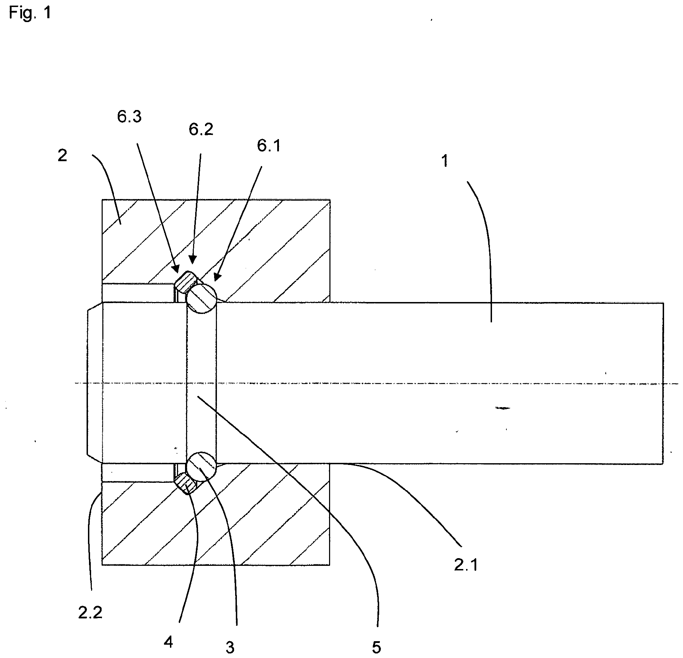

Fig. 1 zeigt ein Ausführungsbeispiel der Differenzialzylinderkolbeneinheit in einer teilgeschnittenen Ansicht.

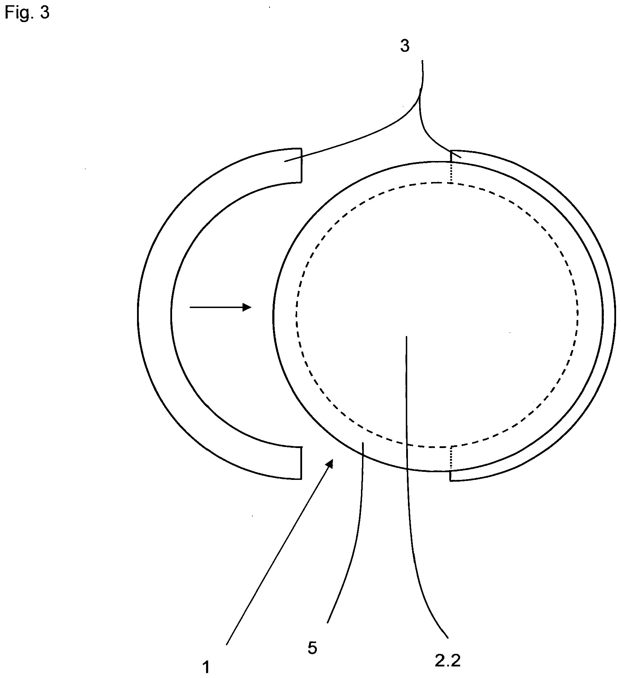

Die Differenzialzylinderkolbeneinheit ist in einem montierten Zustand dargestellt. Der Kolben 2 weist eine axiale Bohrung 2.1 auf, deren Innendurchmesser so auf den Außendurchmesser der Kolbenstange 1 abgestimmt ist, dass die Kolbenstange 1 in der axialen Bohrung 2.1 ohne radiales Spiel aufgenommen werden kann. Die Kolbenstange 1 weist eine Außenringnut 5 auf, welche im Ausführungsbeispiel eine halbkreisförmige Kontur aufweist. In der Außenringnut 5 ist der Kopplungsring 3 angeordnet, welcher - wie Fig. 3 näher zeigt - zweigeteilt ist.

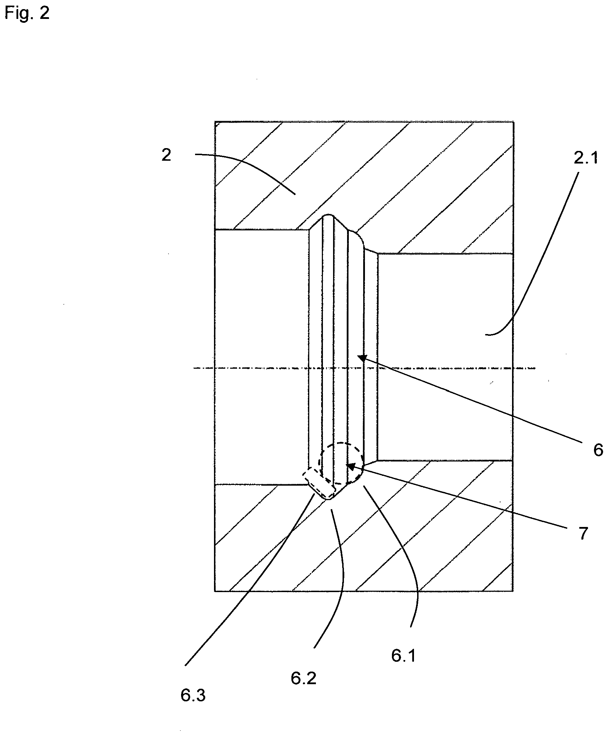

Der Kolben 2 weist eine Innenringnut 6 - siehe hierzu Fig. 2 - mit einer speziell ausgebildeten Kontur auf. Hierbei weist die Innenringnut 6 einen Kopplungsringabschnitt 6.1 sowie einen Fixierringabschnitt 6.2 auf. Der Kopplungsringabschnitt 6.1 bildet gemeinsam mit der Außenringnut 5 einen Kopplungsringnutenraum 7 aus, dessen Anordnung in Fig. 2 mittels einer gestrichelten Linie dargestellt ist. In diesem Kopplungsringnutenraum 7 ist der Kopplungsring 3 angeordnet. Der Kopplungsring 3 wird dabei radial durch den Kopplungsringabschnitt 6.1 umschlossen und so in seiner Lage festgelegt.

Der Fixierring 4 ist federnd ausgebildet und weist eine ovalisierte Form mit abgeflachten Seiten auf. Dadurch nimmt er den Raum zwischen dem Kopplungsring 3 und der Hinterschneidungskontur 6.3 des Kolbens 2 ein und stützt sich hierbei gegen die Hinterschneidungskontur 6.3. Durch den Fixierring 4 wird dem Kolben die axiale Bewegung relativ zu der Kolbenstange 1 in Zugrichtung formschlüssig versperrt. Durch das Zusammenwirken von Kopplungsring 3 und Fixierring 4 ist der Kolben relativ zu der Kolbenstange axial in beiden Richtungen festgelegt.

Fig. 2 zeigt eine Schnittansicht des Kolbens 2, mit der insbesondere die Ausbildung der Innenringnut 6 detaillierter dargestellt ist. Die Innenringnut 6 befindet sind in der Innenwandung in der axialen Bohrung 2.1 des Kolbens 2. Die Innenringnut 6 umfasst den Kopplungsringabschnitt 6.1 und den Fixierringabschnitt 6.2. Der Kopplungsringabschnitt 6.1 stellt den axialen Formschluss zwischen dem Kopplungsring 3 und dem Kolben 2 bereit.

Die Hinterschneidungskontur 6.3 ist ein Teil des Fixierringabschnitts 6.2 und bewirkt den axialen Formschluss des Fixierrings 4 mit dem Kolben 2. Ferner ist in Fig. 2 jeweils in gestrichelter Linie der Kopplungsringnutenraum 7 sowie ohne Bezugszeichen die Anordnung des Fixierrings 4 dargestellt.

In Fig. 3 wird der Kopplungsring 3 mit der Kolbenstange 1 genauer dargestellt. In dieser Ausführung ist der Kopplungsring 3 zweigeteilt ausgebildet. Die beiden Hälften des Kopplungsringes 3 werden in die Außenringnut 5 eingelegt. In Fig. 3 ist dabei zur besseren Darstellung ein Teil des Kopplungsrings 3 (rechts) als bereits in die Außenringnut 5 eingelegt dargestellt und der andere Teil des Kolbenrings 3 (links) noch demontiert dargestellt. Der Pfeil zeigt dabei die radiale Montagerichtung für diesen Teil des Kopplungsrings 3 an.

In einer Zusammenschau von Fig. 1 bis Fig. 4 wird nachfolgend eine mögliche Montage der Differenzialzylinderkolbeneinheit beschrieben.

In einem ersten Arbeitsschritt werden die beiden Teile des zweigeteilten Kopplungsrings 3 in radialer Bewegungsrichtung in die Außenringnut 5 der Kolbenstange 1 eingelegt.

Nachfolgend wird der Kolben 2 auf das führungsseitige Ende der Kolbenstange 1 aufgesetzt und auf der Kolbenstange 1 in Richtung des kolbenbodenseitigen Endes 2.2 verschoben, bis sich die einseitig offene Innenringnut 6 über den Kopplungsring 3 schiebt und der Kopplungsring 3 in dem durch den Kopplungsringabschnitt 6.1 und die Außenringnut 5 gebildeten Kopplungsringnutenraum 7 angeordnet ist. Nun ist der Kopplungsring 3 durch den Kolben 2 mit seiner Innenringnut radial umschlossen und kann nicht mehr aus der Außenringnut 5 herausfallen. Zugleich liegt die Außenkontur des Kopplungsrings 3 formschlüssig in der Außenringnut 5 und in dem Kopplungsringnutenabschnitt 6.1 an, wodurch der Kolben 2 in der Zugrichtung gegenüber der Kolbenstange 1 axial festgelegt ist und axial in Zugrichtung wirkende Kräfte bei einem Betrieb auf die Kolbenstange 1 übertragen kann.

Zur Fixierung der Kolbenposition wird der flexible Fixierring 4 vom kolbenbodenseitigen Ende des Kolbens 2 in die axiale Bohrung 2.2 eingeschoben. Erreicht dieser den Fixierringabschnitt 6.2 spreizt er sich auf und tritt in den Fixierringabschnitt 6.2 ein. Somit wird eine formschlüssige Verbindung mit der Hinterschneidungskontur 6.3 und dem Fixierring 4 erzeugt. Hierfür ist der Fixierring 4 in dem ersten Ausführungsbeispiel als Rundring und in dem zweiten Ausführungsbeispiel als flexibler Konusring mit einem oval abgeschrägten Querschnitt ausgeführt.

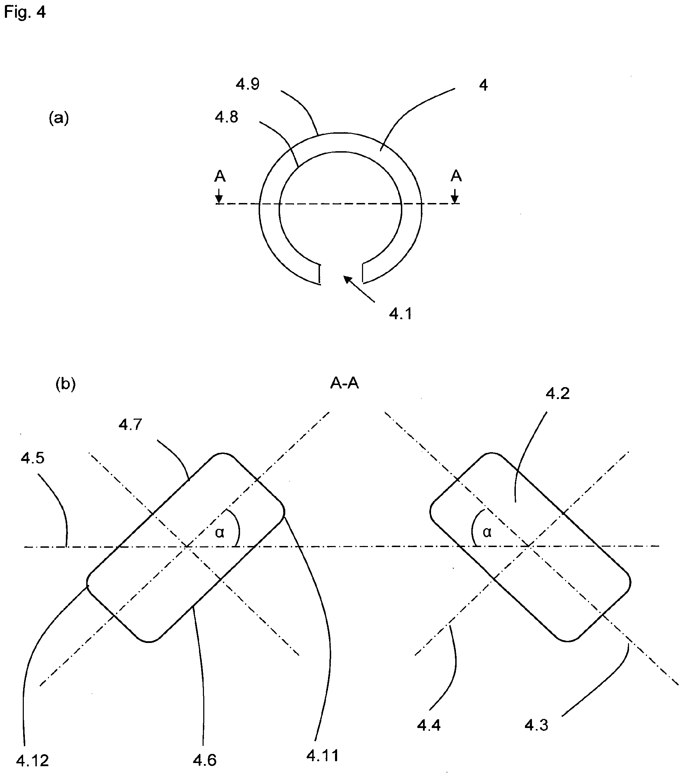

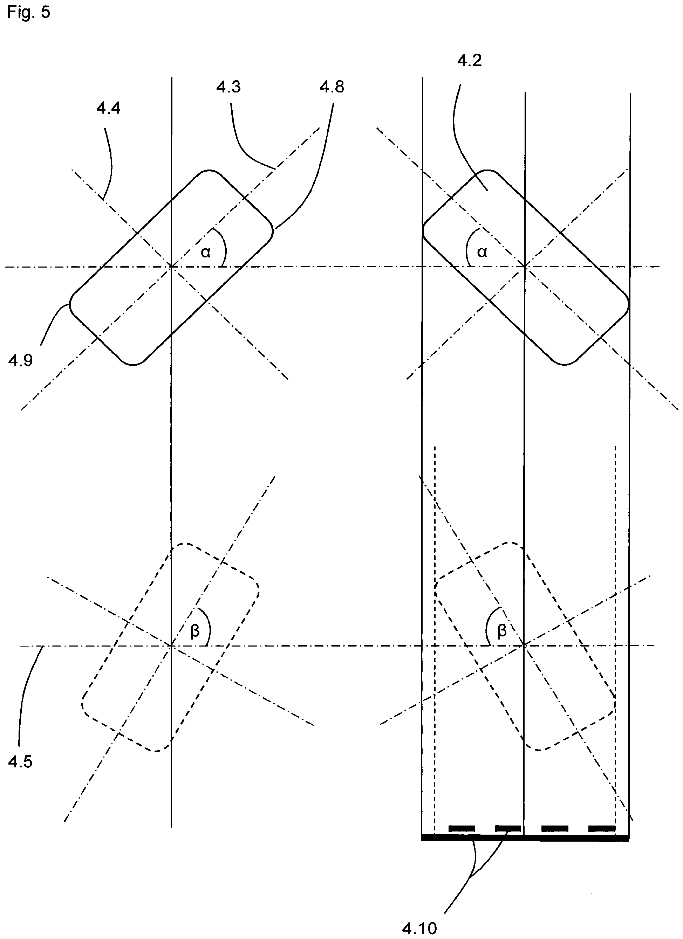

Die Figuren 4 und 5 zeigen den Fixierring in einer besonderen Ausbildung mit einem abgeflachten radialen Querschnitt 4.2.

Fig. 4 (a) zeigt eine Draufsicht des Fixierrings 4. Hierbei weist der Fixierring 4 einen Fixierringspalt 4.1 auf.

In Figur 4 (b) ist eine Schnittansicht entlang der Schnittebene (A-A) des Fixierringes zu sehen. Diese Ansicht zeigt den abgeflachten radialen Querschnitt 4.2 des Fixierrings 4 in einer Vergrößerung. In diesen Querschnitt 4.2 sind die Querschnittslängsachse 4.3 und die Querschnittsquerachse 4.4 einbeschrieben. Durch deren Schnittpunkte verläuft die Ringebene 4.5. Der Innendurchmesser 4.8 und der Außendurchmesser 4.9 werden durch abgerundete Konturen gebildet. Hierbei handelt es sich um die erste Übergangskontur 4.11, welche den Innendurchmesser 4.8 bildet und die zweite Übergangskontur 4.12, welche den Außendurchmesser 4.9 bildet. Die beiden Begrenzungen parallel zu der Querschnittslängsachse 4.3 bilden die beiden Ringflächen 4.6, 4.7, wobei die erste Ringfläche 4.6 die radiale Innenseite und die zweite Ringfläche 4.7 die radiale Außenseite des Fixierrings 4 darstellt.

Zwischen der Querschnittslängsachse 4.3 und der Ringebene 4.5 wird der Winkel α eingeschlossen.

In Fig. 5 ist ein Funktionsschema des gespannten Fixierrings 4 dargestellt. Dabei ist im oberen Zeichnungsabschnitt die Entspannungslage und im unteren Zeichnungsabschnitt die Spannungslage (gestrichelt) dargestellt. Die Darstellung erfolgt analog zu Figur 4 (b).

In der Spannungslage vergrößert sich der Winkel zwischen Querschnittslängsachse 4.3 und Ringebene 4.5. Dieser Winkel in Spannungslage ist im unteren Zeichnungsabschnitt als Winkel β bezeichnet.

Die axiale Überdeckungsfläche 4.10 wird von dem Innen- und dem Außendurchmesser 4.8, 4.9 des Fixierrings 4 begrenzt, welche in Fig. 5 auf die Ringebene 4.5 projiziert ist. In dieser Darstellung wird die axiale Überdeckungsfläche 4.10 zur besseren Übersicht außerhalb der eigentlichen Ringebene 4.5 durch zwei lotrechte Hilfslinien an dem Außendurchmesser 4.9 und dem Innendurchmesser 4.8 dargestellt.

Durch die Vergrößerung des Winkels wird die axiale Überdeckungsfläche 4.10 in der Spannungslage verkleinert. Die axiale Überdeckungsfläche 4.10 ist in der Spannungslage ist als gestrichelte fette Linie und in der Entspannungslage als durchgehende fette Linie dargestellt.

### Verwendete Bezugszeichen

- 1: Kolbenstange
- 2: Kolben
- 2.1: axiale Bohrung
- 2.2: kolbenbodenseitiges Ende
- 3: Kopplungsring
- 4: Fixierring
- 4.1: Fixierringspalt
- 4.2: abgeflachter radialer Querschnitt
- 4.3: Querschnittslängsachse
- 4.4: Querschnittsquerachse
- 4.5: Ringebene
- 4.6: erste Ringfläche
- 4.7: zweite Ringfläche
- 4.8: Innendurchmesser
- 4.9: Außendurchmesser
- 4.10: axiale Überdeckungsfläche
- 4.11: erste Übergangskontur
- 4.12: zweite Übergangskontur
- 5: Außenringnut
- 6: Innenringnut
- 6.1: Kopplungsringabschnitt
- 6.2: Fixierringabschnitt
- 6.3: Hinterschneidungskontur
- 7: Kopplungsringnutenraum
- α: Winkel alpha
- β: Winkel beta

## Patentansprüche

1. Differenzialzylinderkolbeneinheit,
aufweisend eine Kolbenstange (1), einen Kolben (2) einen Kopplungsring (3), und einen Fixierring (4),
wobei die Kolbenstange (1) eine Außenringnut (5) aufweist,
wobei der Kolben (2) eine axiale Bohrung (2.1) aufweist, in der die Kolbenstange (1) aufgenommen ist, und eine zu einem kolbenbodenseitigen Ende (2.2) axial einseitig offene Innenringnut (6) aufweist,
wobei die Innenringnut (6) einen Kopplungsringabschnitt (6.1) und einen hieran angrenzenden Fixierringabschnitt (6.2) aufweist und wobei der Fixierringabschnitt (6.2) eine Hinterschneidungskontur (6.3) aufweist wobei die Außenringnut (5) und der Kopplungsringabschnitt (6.1) einen Kopplungsringnutenraum (7) ausbilden, in welchem der Kopplungsring (3) angeordnet ist,
wobei der Kopplungsring (3) geteilt ausgebildet ist und durch den Kopplungsringabschnitt (6.1) radial umschlossen wird
und wobei der Kolben (2) durch den Kopplungsring (3) auf der Kolbenstange (1) in einer Zugrichtung einseitig axial formschlüssig festgelegt ist, wobei der Fixierring (4) in dem Fixierringabschnitt (6.2) zwischen der Hinterschneidungskontur (6.3) und dem Kopplungsring (3) angeordnet ist,
wobei der Fixierring (4) federnd ausgebildet ist und in einer Entspannungslage in den Fixierringabschnitt (6.2) der Innenringnut (6) eingreift,
**dadurch gekennzeichnet, dass**
der Fixierring (4) einen abgeflachten radialen Querschnitt (4.2) aufweist,
wobei der abgeflachte radiale Querschnitt (4.2) eine Querschnittslängsachse (4.3) und eine Querschnittsquerachse (4.4) aufweist,
wobei sich der Querschnitt (4.2) entlang der Querschnittlängsachse (4.3) länger als entlang der Querschnittsquerachse (4.4) erstreckt,
wobei der Querschnitt (4.2) entlang der Querschnittslängsachse (4.3) gegenüberliegende ebene Begrenzungen aufweist, welche eine erste und eine zweite Ringfläche (4.5, 4.6) ausbilden,
wobei der Fixierring (4) elastisch federnd ausgebildet ist,
wobei der Fixierring (4) ausgebildet ist, unter Einwirkung einer Kraft eine Spannungslage und ohne Einwirkung einer Kraft eine Entspannungslage einzunehmen,
wobei in einer Entspannungslage die Querschnittslängsachse (4.3) gegenüber einer Ringebene (4.7) um einen Winkel alpha geneigt ist,
wobei der Fixierring (4) mittels einer Veränderung der Querschnittslängsachse (4.3) um eine umlaufende Ringachse zu einer Spannungslage spannbar ist, wobei in der Spannungslage die Querschnittslängsachse (4.3) um einen Winkel beta geneigt ist und wobei der Winkel beta größer als der Winkel alpha ist,
und wobei der Fixierring (4) den Kolben (2) auf der Kolbenstange (1) in einer Rückführrichtung einseitig axial und formschlüssig festlegt.

2. Differenzialzylinderkolbeneinheit nach Anspruch 1,
**dadurch gekennzeichnet,**
**dass** der abgeflachte radiale Querschnitt (4.2) des Fixierrings (4) rechteckförmig ausgebildet ist.

3. Differenzialzylinderkolbeneinheit nach Anspruch 1 oder 2,
**dadurch gekennzeichnet,**
**dass** der abgeflachte radiale Querschnitt (4.2) des Fixierrings (4) zumindest an einer ersten Übergangskontur (4.11), welche einen Innendurchmesser ausbildet, und an einer zweiten Übergangskontur (4.12), welche den Außendurchmesser ausbildet, abgerundet ist.

## Claims

1. A piston unit of a differential cylinder,
comprising a piston rod (1), a piston (2), a coupling ring (3), and a fixing ring (4),
wherein the piston rod (1) has an outer ring groove (5),
wherein the piston (2) has an axial bore (2.1) in which the piston rod (1) is received, and it has an inner ring groove (6) which is axially open on one side facing a piston head end (2.2),
wherein the inner ring groove (6) has a coupling ring section (6.1) and a fixing ring section (6.2) adjacent to it, and wherein the fixing ring section (6.2) has an undercut contour (6.3),
wherein the outer ring groove (5) and the coupling ring section (6.1) form a coupling ring groove space (7) in which the coupling ring (3) is arranged,
wherein the coupling ring (3) has a divided design and is radially enclosed by the coupling ring section (6.1),
and wherein the piston (2) is secured by the coupling ring (3) in an axially positive-fit manner on one side on the piston rod (1) in a tensile direction,
wherein the fixing ring (4) is arranged in the fixing ring section (6.2) between the undercut contour (6.3) and the coupling ring (3),
wherein the fixing ring (4) has a resilient design and in a relaxed position it engages in the fixing ring section (6.2) of the inner ring groove (6), **characterized in that** the fixing ring (4) has a flattened radial cross section (4.2),
wherein the flattened radial cross section (4.2) has a cross-sectional longitudinal axis (4.3) and a cross-sectional transverse axis (4.4), wherein the cross section (4.2) extends longer along the cross-sectional longitudinal axis (4.3) than along the cross-sectional transverse axis (4.4), wherein the cross section (4.2) along the cross-sectional longitudinal axis (4.3) has opposing planar boundaries forming a first and a second annular surface (4.5, 4.6),
wherein the fixing ring (4) is elastically resilient,
wherein the fixing ring (4) is designed such that it assumes a tensioned position when it is subject to force and a relaxed position when a force is not applied on it,
wherein in a relaxed position, the cross-sectional longitudinal axis (4.3) is inclined relative to a ring plane (4.7) by an angle alpha,
wherein the fixing ring (4) can be tensioned to a tensioned position by means of a change in the cross-sectional longitudinal axis (4.3) about a circumferential ring axis, wherein in the tensioned position, the cross-sectional longitudinal axis (4.3) is inclined by an angle beta, and wherein the angle beta is greater than the angle alpha,
and wherein the fixing ring (4) secures the piston (2) axially and in a positive-fit manner on one side on the piston rod (1) in a return direction.

2. The differential cylinder piston unit of claim 1,
**characterized in**
**that** the flattened radial cross section (4.2) of the fixing ring (4) has a rectangular design.

3. The differential cylinder piston unit of claim 1 or 2,
**characterized in**
**that** the flattened radial cross section (4.2) of the fixing ring (4) is rounded at least at a first transitional contour (4.11), which forms an inner diameter, and at a second transitional contour (4.12), which forms the outer diameter.

## Revendications

1. Unité de piston de vérin différentiel,
comprenant une tige de piston (1), un piston (2), une bague d'accouplement (3) et une bague de fixation (4),
la tige de piston (1) présentant une rainure annulaire extérieure (5),
le piston (2) présentant un alésage axial (2.1) dans lequel est reçue la tige de piston (1), et présentant une rainure annulaire intérieure (6) ouverte axialement d'un côté vers une extrémité (2.2) située du côté du fond du piston,
la rainure annulaire intérieure (6) présentant une section annulaire d'accouplement (6.1) et une section annulaire de fixation (6.2) adjacente à celle-ci, et la section annulaire de fixation (6.2) présentant un contour en contre-dépouille (6.3),
la rainure annulaire extérieure (5) et la section de bague d'accouplement (6.1) formant un espace de rainure annulaire d'accouplement (7) dans lequel la bague d'accouplement (3) est disposée,
la bague d'accouplement (3) étant réalisée en deux parties et étant entouré radialement par la section annulaire d'accouplement (6.1)
et le piston (2) étant fixé axialement par complémentarité de forme d'un côté sur la tige de piston (1) dans une direction de traction par la bague d'accouplement (3),
la bague de fixation (4) étant disposée dans la section annulaire de fixation (6.2) entre le contour en contre-dépouille (6.3) et la bague d'accouplement (3),
la bague de fixation (4) étant réalisée de manière élastique et s'engageant, dans une position de détente, dans la section annulaire de fixation (6.2) de la rainure annulaire intérieure (6), est **caractérisée en ce que** la bague de fixation (4) présente une section transversale radiale aplatie (4.2),
la section radiale aplatie (4.2) présentant un axe longitudinal de section transversale (4.3) et un axe transversal de section transversale (4.4), la section transversale (4.2) s'étendant plus longuement le long de l'axe longitudinal (4.3) de la section transversale que le long de l'axe transversal (4.4) de la section transversale,
la section transversale (4.2) présentant, le long de l'axe longitudinal (4.3) de la section transversale, des limites planes opposées qui forment une première et une deuxième surfaces annulaires (4.5, 4.6),
la bague de fixation (4) étant conçu de manière élastique,
la bague de fixation (4) étant conçu pour prendre une position de tension sous l'effet d'une force et une position de détente sans l'effet d'une force, l'axe longitudinal de la section transversale (4.3) étant incliné d'un angle alpha par rapport à un plan annulaire (4.7) dans une position de détente, la bague de fixation (4) pouvant être serrée en une position de tension au moyen d'une modification de l'axe longitudinal de section transversale (4.3) autour d'un axe annulaire périphérique, l'axe longitudinal de section transversale (4.3) étant incliné d'un angle bêta dans la position de tension et l'angle bêta étant supérieur à l'angle alpha,
et la bague de fixation (4) fixant axialement d'un côté et par complémentarité de forme le piston (2) sur la tige de piston (1) dans une direction de retour.

2. Unité de piston de vérin différentiel suivant la revendication 1 est **caractérisée en ce**
**que** la section radiale aplatie (4.2) de l'anneau de fixation (4) est de forme rectangulaire.

3. Unité de piston de vérin différentiel suivant les revendications 1 ou 2 est **caractérisée** en ce
en ce que la section radiale aplatie (4.2) de la bague de fixation (4) est arrondie au moins sur un premier contour de transition (4.11), qui forme un diamètre intérieur, et sur un deuxième contour de transition (4.12), qui forme le diamètre extérieur.
